# EUROPÄISCHE PATENTSCHRIFT

(11) **EP 4 471 327 B1**
(45) Veröffentlichungstag und Bekanntmachung des Hinweises auf die Patenterteilung: **28.01.2026**
(21) Anmeldenummer: 23176140.4
(22) Anmeldetag: 30.05.2023
(51) Int. Cl.: F21S 41/153, F21S 41/63, G02B 26/08

(54) **VERFAHREN ZUR DARSTELLUNGSOPTIMIERENDEN ANSTEUERUNG EINES KRAFTFAHRZEUGLEUCHTMODULS**
METHOD FOR CONTROLLING A MOTOR VEHICLE LIGHTING MODULE IN A MANNER THAT IS OPTIMISING THE REPRESENTATION
PROCÉDÉ DE COMMANDE OPTIMISANT LA REPRÉSENTATION D'UN MODULE LUMINEUX DE VÉHICULE AUTOMOBILE

(43) Veröffentlichungstag der Anmeldung: 04.12.2024
(73) Patentinhaber: ZKW Group GmbH, 3250 Wieselburg (AT)
(72) Erfinder: Jiyoung, Jeong, Suwon City (KR); Dongman, Jeong, Seoul (KR)
(74) Vertreter: Patentanwaltskanzlei Matschnig & Forsthuber OG

(56) Entgegenhaltungen:
- US-B1- 10 596 956
- GRUNDH�FER A ET AL: "Recent Advances in Projection Mapping Algorithms, Hardware and Applications", COMPUTER GRAPHICS FORUM : JOURNAL OF THE EUROPEAN ASSOCIATION FOR COMPUTER GRAPHICS, WILEY-BLACKWELL, OXFORD, vol. 37, no. 2, 22 May 2018 (2018-05-22), pages 653 - 675, XP071546200, ISSN: 0167-7055, DOI: 10.1111/CGF.13387

## Beschreibung

Die Erfindung betrifft ein Verfahren zur darstellungsoptimierenden Ansteuerung eines Kraftfahrzeugleuchtmoduls, wobei das Kraftfahrzeugleuchtmodul zur Abstrahlung einer segmentierten Lichtverteilung mit einzeln ansteuerbaren Lichtsegmenten eingerichtet ist.

Aus dem Stand der Technik sind Verfahren zur Ansteuerung von Kraftfahrzeugleuchtmodulen bekannt geworden, die eine zeitlich variable Veränderung der Lichtabstrahlung einzelner Lichtsegmente einer Lichtverteilung ermöglichen. Durch diese zeitlich variable Veränderung kann die Lichtverteilung an verschiedenste Fahrsituationen angepasst werden. Beispielsweise können vorausfahrende oder entgegenkommende Verkehrsteilnehmer ausgeblendet oder bei Bedarf gezielt beleuchtet werden. Mit einer ausreichend hohen Anzahl an Lichtsegmenten einer Lichtverteilung sind weiters auch zeitlich veränderbare Informationsdarstellungen in Form von animierten Symbolen möglich, welche auf eine Oberfläche projiziert werden. Ein anderes Verfahren ist aus der US 10 596 956 B1 bekannt.

Üblicherweise ist die Auflösung der Lichtverteilung durch die Auflösung des betreffenden Kraftfahrzeugleuchtmoduls beschränkt. Auch ist eine Änderungsgeschwindigkeit der zeitlich variablen Veränderung der Lichtabstrahlung durch vorgegeben Schnittstellen begrenzt.

Zur Verbesserung der Lichtabstrahlung wurden bisher die Komponenten des betreffenden Kraftfahrzeugleuchtmoduls verändert, beispielsweise indem Komponenten eingesetzt werden, die eine höhere Auflösung, verbesserten Kontrast, erhöhte Lichtintensitäten, flüssigere Darstellung usw. ermöglichen.

Eine Aufgabe der Erfindung besteht darin, ein Verfahren zu liefern, mit dem die Lichtabstrahlung eines Kraftfahrzeugleuchtmoduls zur Abstrahlung einer segmentierten und sich zeitlich veränderbaren Lichtverteilung weiter verbessert werden kann.

Die Aufgabe wird mit zwei Verfahren (einem ersten Verfahren und einem alternativen Verfahren) gelöst, welche auf derselben Idee aufbauen.

Die Aufgabe wird zum einen mit einem Verfahren der eingangs genannten Art gelöst, indem das Kraftfahrzeugleuchtmodul eine Ablenkeinheit umfasst, mit der eine native Auflösung des Kraftfahrzeugleuchtmoduls durch zumindest zeitweise Strahlablenkung mittels der Ablenkeinheit visuell erhöht werden kann, wobei das Kraftfahrzeugleuchtmodul dazu eingerichtet ist, Sollbilder von einer übergeordneten Steuereinheit zu empfangen, welche Sollbilder jeweils einer Lichtverteilung entsprechen und eine Auflösung aufweisen, welche die native Auflösung des Kraftfahrzeugleuchtmoduls überschreitet, wobei das Verfahren die folgenden Schritte umfasst:
a) Empfangen eines Sollbildes, auch Anfangsbild genannt, und eines zeitlich darauf folgenden Sollbildes, auch Nachfolgebild genannt;
b) Umwandeln des gemäß Schritt a) empfangenen Anfangsbildes in ein niedrig aufgelöstes Bild anhand einer ersten Umwandlungsvorschrift, wobei dieses niedrig aufgelöste Bild dergestalt gewählt ist, dass dieses die native Auflösung des Kraftfahrzeugleuchtmoduls aufweist;
c) Bilden eines Zwischensollbildes aus der Zusammenschau des gemäß Schritt a) empfangenen Anfangsbildes und des gemäß Schritt a) empfangenen Nachfolgebildes;
d) Umwandeln des gemäß Schritt c) gebildeten Zwischensollbildes in ein weiteres niedrig aufgelöstes Bild anhand einer zweiten Umwandlungsvorschrift, wobei dieses weitere niedrig aufgelöste Bild dergestalt gewählt ist, dass es die native Auflösung des Kraftfahrzeugleuchtmoduls aufweist;
e) Ansteuern des Kraftfahrzeugleuchtmoduls, wobei die Ansteuerung dergestalt erfolgt, dass in Abstimmung mit der zeitweisen Strahlablenkung durch die Ablenkeinheit eine zeitliche Abfolge der gemäß Schritt b) und d) gewandelten niedrig aufgelösten Bilder durch das Kraftfahrzeugleuchtmodul abgestrahlt wird, wobei die zeitliche Abfolge der Abstrahlung der gemäß Schritt b) und d) gewandelten niedrig aufgelösten Bilder derart gewählt ist, dass zeitlich abwechselnd das niedrig aufgelöstes Bild gewandelt nach Schritt b) und das weitere niedrig aufgelöstes Bild gewandelt nach Schritt d) abgestrahlt wird.

Damit das Verfahren gegenüber laufend eingehenden Sollbildern besonders robust wird, kann vorgesehen sein, dass das Verfahren einen weiteren Schritt f) umfasst, in welchem zumindest ein weiteres Sollbild empfangen wird und sodann entsprechend der Anzahl der weiteren Sollbilder eine gleichlautende Anzahl an Iterationen der Schritte a) bis e) unter der folgenden Vorgabe durchgeführt wird: Jedes empfangene Sollbild entsprechend der zeitlichen Abfolge wird dergestalt verwertet, dass das aktuelle, gemäß dem vorhergehenden Schritt a), empfangene Nachfolgebild als neues Anfangsbild in einer neuen Iteration der Schritte a) bis e) verwendet wird und dass das zeitlich nachfolgende, gemäß Schritt f) empfangene Sollbild in der neuen Iteration der Schritte a) bis e) als neues Nachfolgebild verwendet wird.

Ergänzend dazu kann mit Vorteil vorgesehen sein, dass das Verfahren in jeder der Iterationen gemäß Schritt f), zeitlich nach Schritt a), einen weiteren Schritt a1) umfasst, in welchem auf ein Freigabesignal geprüft wird, um sodann, bei Vorliegen eines positiven Freigabesignals in der Iteration mit den Schritten b) bis e) fortzusetzen und bei Vorliegen eines negativen Freigabesignals in der Iteration der Schritte b) bis e) den Schritt c) zu überspringen und in Schritt d) das Zwischensollbild durch das, in dieser Iteration gemäß Schritt a) empfangene, Nachfolgebild zu ersetzen, wobei ein positives Freigabesignal vorliegt, wenn sich das Nachfolgebild vom Anfangsbild unterscheidet und ein negatives Freigabesignal vorliegt, wenn sich das Nachfolgebild vom Anfangsbild nicht unterscheidet.

Weiters kann das zumindest eine, gemäß Schritt f) empfangene, weitere Sollbild prädiktiv aus Bilddaten des aktuellen, gemäß dem vorhergehenden Schritt a) empfangenen, Anfangsbildes und des aktuellen, gemäß dem vorhergehenden Schritt a) empfangenen, Nachfolgebildes erzeugt werden.

Eine effiziente Abarbeitung des Verfahrens wird ermöglicht, wenn Schritt c) und Schritt d) gleichzeitig ausgeführt werden.

Bevorzugt erfolgt in Schritt c) die Zusammenschau durch eine zumindest teilweise Interpolation der Sollbildinhalte vom Anfangsbild und dem Nachfolgebild.

Auf derselben Idee aufbauend, kann die Aufgabe alternativ mit einem Verfahren der eingangs genannten Art gelöst werden, indem das Kraftfahrzeugleuchtmodul eine Ablenkeinheit umfasst, mit der eine native Auflösung des Kraftfahrzeugleuchtmoduls durch zumindest zeitweise Strahlablenkung mittels der Ablenkeinheit visuell erhöht werden kann, wobei das Kraftfahrzeugleuchtmodul dazu eingerichtet ist, Sollbilder von einer übergeordneten Steuereinheit zu empfangen, welche Sollbilder jeweils einer Lichtverteilung entsprechen und eine Auflösung aufweisen, welche die native Auflösung des Kraftfahrzeugleuchtmoduls überschreitet, wobei das Verfahren die folgenden Schritte umfasst:
A) Empfangen eines Sollbildes, auch Anfangsbild genannt, und eines zeitlich darauf folgenden Sollbildes, auch Nachfolgebild genannt;
B) Umwandeln des gemäß Schritt A) empfangenen Anfangsbildes in ein niedrig aufgelöstes Zwischenbild anhand einer ersten Umwandlungsvorschrift und in ein niedrig aufgelöstes Zwischenbild anhand einer zweiten Umwandlungsvorschrift, wobei diese niedrig aufgelösten Zwischenbilder dergestalt gewählt sind, dass diese die native Auflösung des Kraftfahrzeugleuchtmoduls aufweisen;
C) Umwandeln des gemäß Schritt A) empfangenen Nachfolgebildes in ein weiteres niedrig aufgelöstes Zwischenbild anhand der ersten Umwandlungsvorschrift und in ein weiteres niedrig aufgelöstes Zwischenbild anhand der zweiten Umwandlungsvorschrift, wobei die weiteren niedrig aufgelösten Zwischenbilder dergestalt gewählt sind, dass diese die native Auflösung des Kraftfahrzeugleuchtmoduls aufweisen;
D) Bilden eines niedrig aufgelösten Bildes aus der Zusammenschau eines niedrig aufgelösten Zwischenbildes, gewandelt anhand der ersten Umwandlungsvorschrift gemäß Schritt B), und eines weiteren niedrig aufgelösten Zwischenbildes, gewandelt anhand der ersten Umwandlungsvorschrift gemäß Schritt C), wobei das niedrig aufgelöste Bild dergestalt gewählt ist, dass dieses die native Auflösung des Kraftfahrzeugleuchtmoduls aufweist;
E) Bilden eines weiteren niedrig aufgelösten Bildes aus der Zusammenschau eines niedrig aufgelösten Zwischenbildes, gewandelt anhand der zweiten Umwandlungsvorschrift gemäß Schritt B), und eines weiteren niedrig aufgelösten Zwischenbildes, gewandelt anhand der zweiten Umwandlungsvorschrift gemäß Schritt C), wobei das weitere niedrig aufgelöste Bild dergestalt gewählt ist, dass dieses die native Auflösung des Kraftfahrzeugleuchtmoduls aufweist;
F) Ansteuern des Kraftfahrzeugleuchtmoduls, wobei die Ansteuerung dergestalt erfolgt, dass in Abstimmung mit der zeitweisen Strahlablenkung durch die Ablenkeinheit eine zeitliche Abfolge der gemäß Schritt D) und E) gebildeten niedrig aufgelösten Bilder durch das Kraftfahrzeugleuchtmodul abgestrahlt wird, wobei die zeitliche Abfolge der Abstrahlung der gemäß Schritt D) und E) gebildeten niedrig aufgelösten Bilder derart gewählt ist, dass zeitlich abwechselnd das niedrig aufgelöstes Bild, gebildet nach Schritt D), und das weitere niedrig aufgelöstes Bild, gebildet nach Schritt E), abgestrahlt wird.

Damit auch das alternative Verfahren gegenüber laufend eingehenden Sollbildern besonders robust wird, kann vorgesehen sein, dass das alternative Verfahren einen weiteren Schritt G) umfasst, in welchem zumindest ein weiteres Sollbild empfangen wird und sodann entsprechend der Anzahl der weiteren Sollbilder eine gleichlautende Anzahl an Iterationen der Schritte A) bis F) unter der folgenden Vorgabe durchgeführt wird: Jedes empfangene Sollbild entsprechend der zeitlichen Abfolge wird dergestalt verwertet, dass das aktuelle, gemäß dem vorhergehenden Schritt A) empfangene Nachfolgebild als neues Anfangsbild in einer neuen Iteration der Schritte A) bis F) verwendet wird und dass das zeitlich nachfolgende, gemäß Schritt G) empfangene Sollbild in der neuen Iteration der Schritte A) bis F) als neues Nachfolgebild verwendet wird.

Sowohl beim ersten als auch beim alternativen Verfahren gilt, dass sich das Anfangsbild vom Nachfolgebild bevorzugt in jeder Iteration unterscheidet, womit eine zeitlich veränderbare Lichtverteilung erreicht wird. Beispielsweise ist es aufgrund vorgegebener Schnittstellen notwendig, die Anzahl der empfangenen Sollbilder pro Sekunde zu begrenzen. Dank der Erfindung kann auch bei einer begrenzten Anzahl an empfangenen Sollbildern pro Sekunde eine flüssigere Darstellung einer zeitlich veränderbaren Lichtverteilung erreicht werden. Die begrenzte Anzahl an empfangenen Sollbildern pro Sekunde kann dabei maximal 60 Sollbilder pro Sekunde, bevorzugt maximal 30 Sollbilder pro Sekunde, besonders bevorzugt maximal 20 Sollbilder pro Sekunde betragen.

Ergänzend kann mit Vorteil vorgesehen sein, dass das alternative Verfahren in jeder der Iterationen gemäß Schritt G), zeitlich nach Schritt A), einen weiteren Schritt A1) umfasst, in welchem auf ein Freigabesignal geprüft wird, um sodann bei Vorliegen eines positiven Freigabesignals in der Iteration mit den Schritten B) bis F) fortzusetzen und bei Vorliegen eines negativen Freigabesignals in der Iteration der Schritte B) bis F) die Schritte C) und E) zu überspringen und in Schritt F) anstatt der zeitlichen Abfolge der niedrig aufgelösten Bilder eine zeitliche Abfolge der gemäß Schritt B) gewandelten niedrig aufgelösten Zwischenbilder in Abstimmung mit der zeitweisen Strahlablenkung durch die Ablenkeinheit durch das Kraftfahrzeugleuchtmodul abzustrahlen,
wobei ein positives Freigabesignal vorliegt, wenn sich das Nachfolgebild vom Anfangsbild unterscheidet und ein negatives Freigabesignal vorliegt, wenn sich das Nachfolgebild vom Anfangsbild nicht unterscheidet.

Dabei kann das zumindest eine, gemäß Schritt G) empfangene, weitere Sollbild prädiktiv aus Bilddaten des aktuellen, gemäß dem vorhergehenden Schritt A) empfangenen, Anfangsbildes und des aktuellen, gemäß dem vorhergehenden Schritt A) empfangenen, Nachfolgebildes erzeugt werden.

Bevorzugt erfolgt in zumindest einem Schritt der Schritte D) und E) die Zusammenschau durch eine zumindest teilweise Interpolation der Bildinhalte der niedrig aufgelösten Zwischenbilder.

Im Lichte der Patentanmeldung wird unter dem Ausdruck "native Auflösung" jene Auflösung verstanden, die durch die Summe der einzeln ansteuerbaren Lichtsegmente zur Lichtabstrahlung gegeben ist. Sind z.B. die Lichtsegmente in zwei Zeilen und zwei Spalten angeordnet und einzeln ansteuerbar, so entspricht das einer nativen Auflösung von 2x2, wobei jedes einzeln ansteuerbare Lichtsegment auch als Leuchtpixel bezeichnet werden kann. Das Kraftfahrzeugleuchtmodul weist vorzugsweise eine native Auflösung von zumindest 2x2 auf, besonders bevorzugt handelt es sich um ein hochauflösendes Kraftfahrzeugleuchtmodul.

Durch die zumindest zeitweise Strahlablenkung mittels der Ablenkeinheit ist es möglich, die durch das menschliche Auge wahrgenommene Auflösung gegenüber der nativen Auflösung zu erhöhen.

Die Erfindung betrifft weiters ein Kraftfahrzeug mit einem Kraftfahrzeugleuchtmodul, wobei das Kraftfahrzeugleuchtmodul zur Abstrahlung einer segmentierten Lichtverteilung eingerichtet ist, wobei das Kraftfahrzeugleuchtmodul eine Ablenkeinheit umfasst, mit der eine native Auflösung des Kraftfahrzeugleuchtmoduls durch zumindest zeitweise Strahlablenkung mittels der Ablenkeinheit visuell erhöht werden kann, wobei das Kraftfahrzeug Mittel zur Durchführung zumindest eines der genannten Verfahren aufweist. Das Kraftfahrzeug ist dabei zur Durchführung des genannten Verfahrens eingerichtet, d.h. es sind geeignete Mittel im Kraftfahrzeug vorgesehen, die auch entsprechend konfiguriert sind.

Das Kraftfahrzeugleuchtmodul ist vorzugsweise für den Einsatz in einer Kraftfahrzeugleuchte, insbesondere in einer Signallichtleuchte oder in einem Kraftfahrzeugscheinwerfer konzipiert. Demnach kann das Kraftfahrzeugleuchtmodul auch Teil der genannten Vorrichtungen sein.

Die Erfindung ist im Folgenden anhand beispielhafter und nicht einschränkender Ausführungsformen näher erläutert, die in den Figuren veranschaulicht sind. Darin zeigt
Figur 1 ein Blockschaltbild eines Kraftfahrzeugleuchtmoduls mit übergeordneter Steuereinheit zum Einsatz im Zusammenhang mit der vorliegenden Erfindung,
Figur 2a schematisch eine native Auflösung eines niedrig aufgelösten Bildes bzw. dessen Projektion,
Figur 2b schematisch eine Überlagerung von zwei niedrig aufgelösten Bildern bzw. deren Projektion,
Figur 2c schematisch die Auflösung eines Sollbildes,
Figur 3a ein Zeitdiagramm zum ersten Verfahren mit einer Abfolge an Schritten, welche entsprechend der Erfindung umgesetzt werden,
Fig. 3b eine Abfolge an Sollbildern und niedrig aufgelösten Bildern, die gebildet/gewandelt bzw. zur Ansteuerung des Kraftfahrzeugleuchtmoduls verwendet werden,
Fig. 4 ein Zeitdiagramm zum alternativen Verfahren mit einer Abfolge an Schritten, welche entsprechend der Erfindung umgesetzt werden.

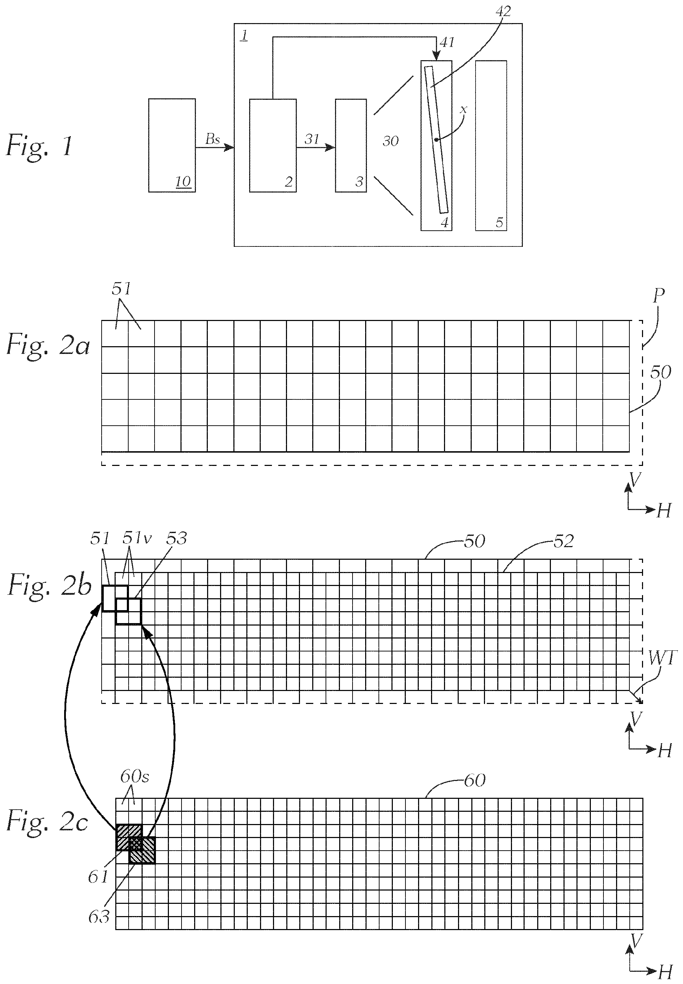

Fig. 1 zeigt ein Blockschaltbild des Kraftfahrzeugleuchtmoduls 1. Das Kraftfahrzeugleuchtmodul 1 ist zur Abstrahlung einer segmentierten Lichtverteilung mit einzeln ansteuerbaren Lichtsegmenten eingerichtet. Das Kraftfahrzeugleuchtmodul 1 umfasst dazu eine Modulsteuereinheit 2, eine Lichtquelle 3, eine Ablenkeinheit 4 und eine Projektionseinheit 5. Das Kraftfahrzeugleuchtmodul 1 ist dazu eingerichtet, ein Bildsignal Bs von einer übergeordneten Steuereinheit 10 zu empfangen. Die übergeordnete Steuereinheit 10 ist dazu eingerichtet, das Bildsignal Bs abzugeben.

Das Bildsignal Bs enthält Sollbilder, welche Sollbilder jeweils einer Lichtverteilung entsprechen und eine Auflösung aufweisen, welche die native Auflösung des Kraftfahrzeugleuchtmoduls 1 überschreitet. Der Umstand verschiedener Auflösungen wird in Fig. 2a bis Fig. 2c näher erläutert.

Es sind bereits verschiedenste Techniken bekannt geworden, um eine segmentierte Lichtverteilung zu generieren. Dazu gehört insbesondere die flächenbasierte Modulation mittels LEDs (Licht emittierende Dioden) angeordnet in einer Matrix, die flächenbasierte Modulation von Licht mittels eines LCD (Liquid Crystal Display), oder die flächenbasierte Modulation von Licht mittels DLP (Digital Light Processing) bzw. DMD (Digital Mirror Device). Alternativ dazu sind auch Lichtstrahl-Modulationstechniken bekannt geworden, also scannende Systeme, die Lichtstrahlen oder Lichtbündel mit einer für das menschliche Auge nicht wahrnehmbaren Frequenz auf einen Bereich scannen, sodass frei variierbare Lichtverteilungen entstehen. Die heute bekannten hochauflösenden Kraftfahrzeugleuchtmodule erlauben bereits Auflösungen mit mehreren 1000 individuell schaltbaren und dimmbaren Lichtsegmenten, bevorzugt sind diese in einem Seitenverhältnis von 1:4 angeordnet, wobei sich die größere Ausdehnung in der Horizontalen erstreckt.

Horizontal und Vertikal kann sich dabei auf die vorgesehene Einbauposition des Kraftfahrzeugleuchtmoduls 1 beziehen, wobei lediglich wesentlich ist, dass mit Horizontal und Vertikal zueinander orthogonale Orientierungen bezeichnet werden.

Die in Fig. 1 gezeigte Lichtquelle 3 kann mehrere Elemente umfassen. Beispielsweise umfasst die Lichtquelle 3 ein lichtemittierendes Element und einen nachgeordneten Flächenmodulator (nicht gezeigt), wie beispielsweise einen LCD, DMD bzw. DLP. Bevorzugt umfasst die Lichtquelle 3 ein Array mit mindestens zwei LEDs, wobei jede LED individuell steuerbar ist. Besonders bevorzugt umfasst die Lichtquelle 3 ein Array mit mehr als 1000 individuell steuerbaren LEDs, welche in einem Array mit einem Seitenverhältnis 1:4 angeordnet sind.

Weiters kann die Lichtquelle 3 alternativ eine Kombination aus einem lichtemittierenden Element, einem Kollimator und einem Lichtstrahlmodulator umfassen, welcher in scannender Form kollimiertes Licht des lichtemittierenden Elements mit einer für das menschliche Auge nicht wahrnehmbaren Frequenz auf einen Bereich scannt. In diesem Bereich kann ein Lichtkonversionselement angeordnet sein. Die Lichtquelle 3 kann daher aus mehreren Elementen bestehen. Beispielsweise können zusätzliche Elemente wie optische Linsen oder Reflektoren vorgesehen sein, welche der Übersicht halber aber nicht gezeigt sind.

Wesentlich ist, dass von der Lichtquelle 3 ein Lichtbündel 30 ausgeht, welches in zumindest einer Ebene senkrecht zur Lichtausbreitungsrichtung des Lichtbündels 30 mindestens zwei Lichtsegmente aufweist, welche zueinander unterschiedliche Lichtintensitäten aufweisen können. Dieses Lichtbündel 30 entspricht somit in zumindest einer Ebene senkrecht zur Lichtausbreitungsrichtung des Lichtbündels 30 einem niedrig aufgelösten Bild.

Zu diesem Zweck kann die Lichtquelle 3 ein Lichtsteuersignal 31 empfangen und in Abhängigkeit von dem Lichtsteuersignal 31 ein Lichtbündel 30 abstrahlen. Das Lichtsteuersignal 31 kann zu diesem Zweck repräsentativ für das von der Lichtquelle 3 ausgehende Lichtbündel 30 sein.

Die Modulsteuereinheit 2 kann dazu eingerichtet sein, das Lichtsteuersignal 31 abzugeben. Insbesondere kann die Modulsteuereinheit 2 das Bildsignal Bs der übergeordneten Steuereinheit 10 empfangen, auswerten und auf Grundlage dessen das Lichtsteuersignal 31 abgeben.

Das von der Lichtquelle 3 ausgehende Lichtbündel 30 wird von der Projektionseinheit 5 innerhalb eines Projektionswinkelbereiches P vor das Kraftfahrzeugleuchtmodul 1 projiziert. Damit wird eine bestimmte Lichtverteilung bzw. ein bestimmtes niedrig aufgelöstes Bild durch das Kraftfahrzeugleuchtmodul 1 abgestrahlt. Dementsprechend ergibt sich eine Projektion 50 eines bestimmten niedrig aufgelösten Bildes, welche Projektion 50 innerhalb eines Projektionswinkelbereiches P vor das Kraftfahrzeugleuchtmodul 1 projiziert wird. Eine solche Projektionseinheit 5 umfasst üblicherweise mehrere optische Elemente, insbesondere Linsen. Der Übersicht halber sind diese mehreren optischen Elemente nicht gezeigt.

Der Projektionswinkelbereich P wird durch die Apertur der Projektionseinheit 5 bestimmt. Also entspricht der Projektionswinkelbereich P dem maximal möglichen Abstrahlkegel der Projektionseinheit 5. Ein solcher Abstrahlkegel bezieht sich auf einen Kegel im mathematischen Sinne, wobei auch alle Untervarianten davon mitumfasst sein können. Untervarianten sind beispielsweise Pyramidenkegel oder Kegelstümpfe.

Wie in Fig. 2a gezeigt, umfasst die Projektion 50 eines niedrig aufgelösten Bildes ein Array an Lichtsegmenten 51 mit 5 Reihen und 20 Spalten. Damit umfasst die gezeigte native Auflösung des Kraftfahrzeugleuchtmoduls 1 20 x 5 Lichtsegmente 51. Wenngleich lediglich 100 Lichtsegmente 51 gezeigt sind, kann die Lichtquelle 3 derart ausgestaltet sein, dass innerhalb des Projektionswinkelbereiches P mehrere tausend Lichtsegmente 51 projiziert bzw. durch das Kraftfahrzeugleuchtmodul 1 abgestrahlt werden.

Die in Fig. 1 gezeigte Ablenkeinheit 4 kann nun das von der Lichtquelle 3 abgestrahlte Lichtbündel 30 und damit auch die Projektion 50 zeitweise ablenken. Damit kann die native Auflösung des Kraftfahrzeugleuchtmoduls 1 durch zumindest zeitweise Strahlablenkung mittels der Ablenkeinheit 4 visuell erhöht werden.

Bevorzugt ist die Ablenkeinheit 4 im Strahlengang des Lichtbündels 30 zwischen der Lichtquelle 3 und zumindest einem Teil der Projektionseinheit 5 angeordnet. Mit zumindest einem Teil der Projektionseinheit 5 sei gemeint, dass diese wie oben erläutert aus mehreren optischen Elementen bestehen kann, zwischen welchen die Ablenkeinheit 4 angeordnet sein kann.

Die Ablenkeinheit 4 kann ein Ablenksteuersignal 41 empfangen und das von der Lichtquelle 3 abgestrahlte Lichtbündel 30 in Abhängigkeit von dem Ablenksteuersignal 41 ablenken. Damit kann auch die Projektion 50 eines niedrig aufgelösten Bildes in Abhängigkeit von dem Ablenksteuersignal 41 zeitweise innerhalb des Projektionswinkelbereiches P abgelenkt werden.

Die Modulsteuereinheit 2 kann dazu eingerichtet sein das Ablenksteuersignal 41 abzugeben.

Die Ablenkeinheit 4 kann ein Glasplättchen 42 umfassen, welches aus einem Material besteht, das transparent für das abgestrahlte Lichtbündel 30 der Lichtquelle 3 ist. Dieses Glasplättchen kann als planparallele Platte ausgeführt sein und durch eine entsprechende mechanische Aufhängung um zumindest eine Schwenkachse x schwenkbar gelagert sein, wobei diese Schwenkachse x bevorzugt senkrecht zur Lichtausbreitungsrichtung des von der Lichtquelle 3 abgestrahlten Lichtbündel 30 steht. Beispielsweise kann die Ablenkeinheit 4 weiters einen elektromagnetischen Aktuator aufweisen, welcher das Glasplättchen 42 abhängig vom Ablenksteuersignal 41 um die zumindest eine Schwenkachse x zeitweise schwenkt. Durch die Schwenkung kann der Eintrittswinkel des Lichtbündels 30 in das Glasplättchen zeitweise geändert werden, womit entsprechend der Lichtbrechung das Lichtbündel 30 beim Lichtdurchtritt durch das Glasplättchen 42 parallel zur Lichtausbreitungsrichtung des Lichtbündels 30 abgelenkt werden kann. Dadurch kann die Projektion 50 des von der Lichtquelle abgestrahlten Lichtbündels 30 bzw. eines niedrig aufgelösten Bildes vor das Kraftfahrzeugleuchtmodul 1 abgelenkt werden, um die native Auflösung des Kraftfahrzeugleuchtmoduls 1 visuell zu erhöhen. Dieser Umstand wird anhand der Fig. 2b näher erläutert.

Dem Fachmann sind verschiedenste Möglichkeiten bekannt, um eine derartige Ablenkeinheit 4 zu schaffen. Beispielsweise sind auch Prismen denkbar, welche durch laterale Positionsänderung (bezogen auf die Lichtausbreitungsrichtung des Lichtbündels 30) und damit ebenfalls durch Brechung die Projektion 50 des von der Lichtquelle 3 abgestrahlten Lichtbündels 30 bzw. eines niedrig aufgelösten Bildes innerhalb des Projektionswinkelbereiches P ablenken. Möglich sind auch reflektive Lösungen einer Ablenkeinheit 4.

Durch die zumindest zeitweise Ablenkung der Projektion 50 eines niedrig aufgelösten Bildes innerhalb des Projektionswinkelbereiches P wird, wie in Fig. 2b gezeigt, der beleuchtbare Winkelbereich innerhalb des Projektionswinkelbereiches P erweitert. Insbesondere kann mit einer ausreichend schnellen und oszillierenden Ablenkung bzw. mit einer ausreichend hohen Ablenkfrequenz von mindestens 60 Hz, bevorzugt 120 Hz eine abgelenkte Projektion 52 und eine nicht abgelenkte Projektion 50 überlagert werden. Dadurch können visuelle Lichtsegmente 51v gebildet werden, durch welche die native Auflösung des Kraftfahrzeugleuchtmoduls 1 visuell erhöht wird. Es wird der Einfachheit halber von einer Überlagerung gesprochen, wenngleich klar ist, dass sich die Überlagerung durch die Trägheit des menschlichen Auges ergibt.

Eine zumindest zeitweise Ablenkung der Projektion 50, 52 innerhalb des Projektionswinkelbereiches P meint also die Verschiebung der Projektion 50, 52 im möglichen Abstrahlkegel, also im Winkelraum, der sich durch die Projektionseinheit 5 ergibt. Der Projektionswinkelbereich P besitzt bevorzugt eine horizontale und eine vertikale Ausdehnung, wobei die horizontale Ausdehnung größer als die vertikale Ausdehnung sein kann. Beispielsweise deckt die horizontale Ausdehnung einen Winkelbereich von maximal 50° und die vertikale Ausdehnung einen Winkelbereich von maximal 20° ab.

Im Sinne dieser Beschreibung zeigen die nicht abgelenkte Projektion 50 und die abgelenkte Projektion 52 jeweils die Projektion eines niedrig aufgelösten Bildes. Diese niedrig aufgelösten Bilder entsprechen jeweils einer Lichtverteilung und weisen die native Auflösung des Kraftfahrzeugleuchtmoduls 1 auf. Die nicht abgelenkte Projektion 50 weist damit nicht abgelenkte Lichtsegmente 51 auf und die abgelenkte Projektion 52 weist damit abgelenkte Lichtsegmente 53 auf.

Fig. 2c zeigt die Auflösung der Lichtverteilung 60 eines Sollbildes, welches Sollbild einer Lichtverteilung 60 mit einer Vielzahl an Solllichtsegmenten 60s entspricht. Die Auflösung eines Sollbildes entspricht der Anzahl der Solllichtsegmenten 60s und überschreitet die native Auflösung des Kraftfahrzeugleuchtmoduls 1.

Verglichen mit Fig. 2b kann diese Auflösung der Lichtverteilung 60 eines Sollbildes, annähernd durch die beschriebene Überlagerung einer abgelenkten Projektion 52 und einer nicht abgelenkten Projektion 50 innerhalb des Projektionswinkelbereichs P erreicht werden.

"abgelenkt" und "nicht abgelenkt" soll dabei lediglich eine Ablenkung relativ zueinander bezeichnen, unabhängig davon, ob absolut gesehen eine Ablenkung passiert oder nicht. Beispielsweise kann aufgrund von Anforderungen die nicht abgelenkte Projektion 50 ebenso mit geeigneten Mitteln abgelenkt werden. Wesentlich ist, dass sich zwischen der abgelenkten Projektion 52 und der nicht abgelenkten Projektion 50 zumindest ein Verschiebungswinkel WT mit einer entsprechenden Richtung ergibt.

Die zeitweise Strahlablenkung kann also anhand einer Ablenkfrequenz und anhand eines Verschiebungswinkels WT mit einer Richtung beschrieben werden. Die Richtung von der abgelenkten Projektion 52 zur nicht abgelenkten Projektion 50 entspricht somit der Richtung der zeitweisen Strahlablenkung.

Der Verschiebungswinkel WT wird gemessen an der Verschiebung in Bezug auf eine Neutralposition der Projektion 50, 52 innerhalb des Projektionswinkelbereiches P, wobei der Verschiebungswinkel WT in dieser Neutralposition 0° beträgt. Bevorzugt ist der Verschiebungswinkel WT kleiner als die größte Winkelabmessung eines einzelnen Lichtsegmentes 51, 53. Besonders bevorzugt kann der Verschiebungswinkel WT einen Wert zwischen -2° und +2° annehmen. Sehr besonders bevorzugt entspricht der Verschiebungswinkel WT im Wesentlichen einem horizontalen Versatz um ein halbes Lichtsegment 51, 53 und/oder im Wesentlichen einem vertikalen Versatz um ein halbes Lichtsegment 51, 53.

Nun weist üblicherweise eine derartige Lichtverteilung 60 eines Sollbildes einen bestimmten Informationsgehalt auf, welcher durch die Überlagerung einer abgelenkten Projektion 52 und einer nicht abgelenkten Projektion 50 innerhalb des Projektionswinkelbereichs P dargestellt werden soll. Anhand entsprechend festgelegter Umwandlungsvorschriften, muss daher ein Bild für die abgelenkte Projektion 52 und ein Bild für die nicht abgelenkte Position 50 aus dem Sollbild gewandelt werden. Damit entspricht die Projektion 50, 52 zu mehreren Zeitpunkten unterschiedlichen niedrig aufgelösten Bildern, welche in einer zeitlichen Abfolge durch das Kraftfahrzeugleuchtmodul 1 abgestrahlt werden. Diese zeitliche Abfolge der Abstrahlung erfolgt in Abstimmung mit der zeitweisen Strahlablenkung durch die Ablenkeinheit 4, um durch die beschriebene Überlagerung zumindest annähernd die Lichtverteilung 60 des Sollbildes zu erhalten.

Mit "Abstimmung" ist daher eine zeitlich zumindest annähernd synchrone Strahlablenkung durch die Ablenkeinheit 4 mit der Abstrahlung der niedrig aufgelösten Bilder bzw. deren Projektion 50, 52 gemeint.

Jedes Solllichtsegment 60s als auch jedes Lichtsegment 51, 53 einer Lichtverteilung besitzt einen bestimmten Lichtintensitätswert, welcher entsprechend dem ersten Verfahren und dem alternativen Verfahren in den einzelnen Schritten verarbeitet werden kann. In der Beschreibung zu den Verfahren wird der Einfachheit halber auf die Solllichtsegmente 60s und die Lichtsegmente 51, 53 referenziert, wenngleich damit klarerweise deren Lichtintensitätswert gemeint ist.

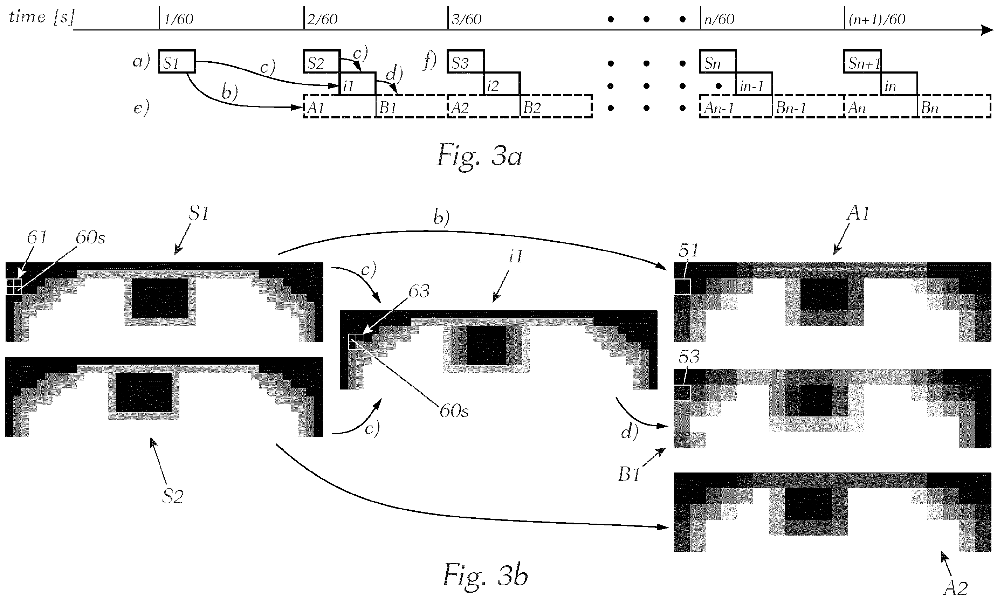

Nun wird anhand der Figuren 3a und 3b auf das erste Verfahren eingegangen.

Gemäß eines ersten Schrittes, genannt Schritt a), wird ein Sollbild S1 zum Zeitpunkt 1/60 s empfangen, dieses Sollbild S1 kann als Anfangsbild bezeichnet werden. Weiters wird in diesem Schritt a) ein zeitlich darauffolgendes, zum Zeitpunkt 2/60 s, Sollbild S2 empfangen, welches als Nachfolgebild bezeichnet werden kann.

Die Sollbilder S1, S2 entsprechen jeweils einer Lichtverteilung und weisen eine Auflösung auf, welche die native Auflösung des Kraftfahrzeugleuchtmoduls 1 überschreitet. Bevorzugt weisen alle Sollbilder S1, S2 dieselbe Auflösung auf.

Das Anfangsbild S1 wird in einem Folgeschritt, genannt Schritt b), anhand einer ersten Umwandlungsvorschrift in ein niedrig aufgelöstes Bild A1 gewandelt. Dieses niedrig aufgelöste Bild A1 ist dergestalt gewählt, dass es die native Auflösung des Kraftfahrzeugleuchtmoduls 1 aufweist. Im vorliegenden Beispiel umfasst die native Auflösung des Kraftfahrzeugleuchtmoduls 1 5 x 20 Lichtsegmente.

In einem weiteren Schritt, genannt Schritt c), wird ein Zwischensollbild i1 gebildet. Dieses wird aus der Zusammenschau des gemäß Schritt a) empfangenen Anfangsbildes S1 und des gemäß Schritt a) empfangenen Nachfolgebildes S2 gebildet.

Mit Zusammenschau sei gemeint, dass der Informationsgehalt des Anfangsbildes S1 und des Nachfolgebildes S2 miteinander kombiniert wird, sodass ein Zwischensollbild i1 entsteht, welches Informationen von Anfangsbild S1 und Nachfolgebild S2 beinhaltet, wobei das Zwischensollbild i1 eine Auflösung aufweist, welche die native Auflösung des Kraftfahrzeugleuchtmoduls 1 überschreitet. Bevorzugt weisen das Zwischensollbild i1, das Anfangsbild S1 und das Nachfolgebild S2 dieselbe Auflösung auf. Demnach kann das Zwischensollbild i1 ebenso einer Lichtverteilung mit einer Vielzahl an Solllichtsegmenten 60s entsprechen.

Wie beschrieben, entspricht jedes Sollbild S1, S2 bzw. das Anfangsbild S1 und das Nachfolgebild S2 einer Lichtverteilung mit einer Vielzahl an Solllichtsegmenten 60s. Die Zusammenschau des gemäß Schritt a) empfangenen Anfangsbildes S1 und des gemäß Schritt a) empfangenen Nachfolgebildes S2 kann eine zumindest teilweise Interpolation zwischen Anfangsbild S1 und Nachfolgebild S2 umfassen. Damit kann die Zusammenschau einer Methode entsprechen, die eine Interpolationsfunktion zwischen dem Lichtintensitätswert von einem Solllichtsegment 60s des Anfangsbildes S1 und dem Lichtintensitätswert von einem positionsgleichen Solllichtsegment 60s des Nachfolgebildes S2 beinhaltet, wobei das Ergebnis dann für das positionsgleiche Solllichtsegment des gemäß Schritt c) gebildeten Zwischenbildes i1 verwendet wird. Bevorzugt wird eine derartige Interpolationsfunktion auf alle positionsgleichen Solllichtsegmente 60s des Anfangsbildes S1 und des Nachfolgebildes S2 angewendet, um die Lichtintensitätswerte aller positionsgleichen Sollichtsegmente 60s des Zwischenbildes i1 zu berechnen. Es gibt verschiedenste Vorschriften oder Methoden, um durch eine Zusammenschau zweier Sollbilder S1, S2 bzw. des Anfangsbildes S1 und des Nachfolgebildes S2 ein Zwischensollbild i1 zu bilden. Abhängig von unterschiedlichsten Anforderungen können unterschiedlichste Interpolationsfunktionen verwendet werden. Die Interpolationsfunktion kann eine arithmetische Mittelwertbildung beinhalten.

Mit "positionsgleich" sind im Zusammenhang mit der Beschreibung jene Elemente von zwei auflösungsgleichen Bildern (Sollbild, Anfangsbild, Nachfolgebild, Zwischenbild; niedrig aufgelöstes Bild, weiteres niedrig aufgelöstes Bild) zu bezeichnen, welche denselben Index besitzen, wenn man diese Bilder als Matrizen modelliert. Jedes Element besitzt einen individuellen Index und ist im Beispiel eines Sollbildes jeweils einem Solllichtsegment 60s oder im Beispiel eines niedrig aufgelösten Bildes jeweils einem Lichtsegment 51 zuzuordnen.

In einem weiteren Schritt, genannt Schritt d), wird das gemäß Schritt c) gebildete Zwischensollbild i1 in ein weiteres niedrig aufgelöstes Bild B1 gewandelt. Dies geschieht anhand einer zweiten Umwandlungsvorschrift. Das weitere niedrig aufgelöste Bild B1 ist dergestalt gewählt, dass es die native Auflösung des Kraftfahrzeugleuchtmoduls 1 aufweist.

Die erste Umwandlungsvorschrift und die zweite Umwandlungsvorschrift sind dabei bevorzugt unterschiedlich, wobei die erste Umwandlungsvorschrift und die zweite Umwandlungsvorschrift in Abhängigkeit des Verschiebungswinkels WT und dessen Richtung bzw. in Abhängigkeit der zeitweisen Strahlablenkung mittels der Ablenkeinheit 4 gewählt werden können.

Die erste Umwandlungsvorschrift und die zweite Umwandlungsvorschrift können dabei dergestalt gewählt sein, dass eine Überlagerung des resultierenden niedrig aufgelösten Bildes A1 und des weiteren niedrig aufgelösten Bildes B2, bzw. deren Projektionen 50, 52 wie in Fig. 2b gezeigt, relativ zueinander verschoben, einen ähnlicheren Bildeindruck zu einem der beiden zugrunde liegenden Sollbilder S1, S2 ergibt, als die einzelnen niedrig aufgelösten Bilder A1, B1 für sich genommen.

Die erste Umwandlungsvorschrift kann die arithmetische Mittelwertbildung von Blöcken 61 bestehend aus 2x2 benachbarten Solllichtsegmenten 60s des Anfangsbildes S1 umfassen, wobei der daraus resultierende arithmetische Mittelwert für ein Lichtsegment 51 des niedrig aufgelösten Bildes A1 verwendet wird. Gemäß einer beispielhaften ersten Umwandlungsvorschrift können alle Lichtsegmente 51 des niedrig aufgelösten Bildes A1 nach dieser Methode generiert werden, wobei jedes Lichtsegment 51 des niedrig aufgelösten Bildes A1 aus einem individuellen Block 61, wiederum bestehend aus 2x2 benachbarten Solllichtsegmenten 60s, generiert wird.

Die zweite Umwandlungsvorschrift kann ebenso eine arithmetische Mittelwertbildung von Blöcken 63 aus dem Zwischensollbild i1 umfassen. Die zweite Umwandlungsvorschrift ist in diesem Beispiel in Abhängigkeit des Verschiebungswinkels WT und dessen Richtung bzw. in Abhängigkeit der zeitweisen Strahlablenkung mittels der Ablenkeinheit 4 gewählt worden. Daher wird für das positionsgleiche Lichtsegment 53 des weiteren niedrig aufgelösten Bildes B1, verglichen mit dem positionsgleichen Lichtsegment 51 des niedrig aufgelösten Bildes A1, ein anderer korrespondierender Block 63, bestehend aus 2x2 benachbarten Solllichtsegmenten 60s verwendet. Gemäß einer beispielhaften zweiten Umwandlungsvorschrift können alle Lichtsegmente 53 des weiteren niedrig aufgelösten Bildes B1 nach dieser Methode generiert werden, wobei jedes Lichtsegment 53 des weiteren niedrig aufgelösten Bildes B1 aus einem individuellen Block, wiederum bestehend aus 2x2 benachbarten Solllichtsegmenten 60s, generiert wird, wobei jeder individuelle Block in Abhängigkeit der zeitweisen Strahlablenkung mittels der Ablenkeinheit 4 gewählt wird.

Randprobleme, welche aufgrund der positionsversetzten Blockverarbeitung auftreten, können mit bekannten Maßnahmen gelöst werden.

Abhängig von Anforderungen und der Auflösung des Sollbildes S1, S2 bzw. des Zwischensollbildes i1, kann sowohl die erste als auch die zweite Umwandlungsvorschrift adaptiert werden. Es gibt ebenso verschiedenste Methoden, welche alternativ zur blockweisen arithmetischen Mittelwertbildung angewandt werden können. Beispielsweise kann ebenso blockweise eine Medianwertbildung angewandt werden. Die Größe der Blöcke 61, 63 kann vom Verhältnis der nativen Auflösung des Kraftfahrzeugleuchtmoduls 1 zur Auflösung des entsprechenden Sollbildes abhängig sein, wobei bevorzugt die Größe aller Blöcke 61, 63 gleich dem Kehrwert des Verhältnisses der nativen Auflösung des Kraftfahrzeugleuchtmoduls 1 zur Auflösung des entsprechenden Sollbildes ist.

Bevorzugt kann Schritt c) und Schritt d) gleichzeitig ausgeführt werden, indem aus dem gemäß Schritt a) empfangenen Anfangsbild S1 und dem gemäß Schritt a) empfangenen Nachfolgebild S2 eine Vorschrift angewandt wird, die die Zusammenschau gemäß Schritt c) und die zweite Umwandlungsvorschrift gemäß Schritt d) beinhaltet. Beispielsweise kann der arithmetische Mittelwert eines jeden 2x2 Blocks des Anfangsbildes S1 gemeinsam mit jedem positionsgleichen 2x2 Block des Nachfolgebildes S2 gebildet werden, um sodann für jedes Lichtsegment 53 des weiteren niedrig aufgelösten Bildes B1 einen Lichtintensitätswert zu erhalten.

Nachfolgend wird in einem weiteren Schritt, genannt Schritt e), das Kraftfahrzeugleuchtmodul 1 angesteuert. Die Ansteuerung erfolgt dergestalt, dass in Abstimmung mit der zeitweisen Strahlablenkung durch die Ablenkeinheit 4 eine zeitliche Abfolge der gemäß Schritt b) und d) gewandelten niedrig aufgelösten Bilder A1, B1 durch das Kraftfahrzeugleuchtmodul 1 abgestrahlt wird. Die zeitliche Abfolge der Abstrahlung der gemäß Schritt b) und d) gewandelten niedrig aufgelösten Bilder A1, B1 ist derart gewählt, dass zeitlich abwechselnd das niedrig aufgelöste Bild A1, gewandelt nach Schritt b), und das weitere niedrig aufgelöste Bild B1, gewandelt nach Schritt d), abgestrahlt wird.

Entsprechend dem gezeigten Zeitdiagramm wird zuerst das niedrig aufgelöste Bild A1, gewandelt nach Schritt b), und anschließend das niedrig aufgelöste Bild B1, gewandelt nach Schritt d), durch das Kraftfahrzeugleuchtmodul 1 abgestrahlt. Die Ansteuerung kann durch eine entsprechende Ausgabe des Lichtsteuersignals 31 durch die Modulsteuereinheit 2 an die Lichtquelle 3 geschehen. Zwischen der Abstrahlung des niedrig aufgelösten Bildes A1, gewandelt nach Schritt b), und der Abstrahlung des niedrig aufgelösten Bildes B1, gewandelt nach Schritt d), kann ein minimaler Zeitbereich vorgesehen sein, in welchem minimalen Zeitbereich es zu keiner Abstrahlung durch das Kraftfahrzeugleuchtmodul 1 kommt. Der minimale Zeitbereich kann maximal 10ms andauern.

Wesentlich ist, dass die Abstrahlung in Abstimmung mit der zeitweisen Strahlablenkung durch die Ablenkeinheit 4 passiert. Wie bereits beschrieben ist damit gemeint, dass die wechselnde Abstrahlung der niedrig aufgelösten Bilder A1, B1 zumindest annähernd synchron mit der zeitlich wechselnden Strahlablenkung durch die Ablenkeinheit 4 passiert. Demnach ist die Modulsteuereinheit 2 bevorzugt dazu eingerichtet, ein entsprechendes Ablenksteuersignal 41 zumindest annähernd synchron zum Lichtsteuersignal 31 an die Ablenkeinheit 4 abzugeben, sodass in Abstimmung mit der zeitweisen Strahlablenkung durch die Ablenkeinheit 4 eine zeitliche Abfolge der gemäß Schritt b) und d) gewandelten niedrig aufgelösten Bilder A1, B1 durch das Kraftfahrzeugleuchtmodul 1 abgestrahlt wird.

Auch ist es möglich, vor der Ansteuerung des Kraftfahrzeugleuchtmoduls 1 die gemäß Schritt e) und die gemäß Schritt b) und d) gewandelten niedrig aufgelösten Bilder A1, B1 in einem Speicher abzuspeichern. Die Modulsteuereinheit 2 kann einen derartigen Speicher aufweisen und zur Abspeicherung, sowie zum wiederkehrenden Abrufen der gewandelten niedrig aufgelösten Bilder A1, B1 eingerichtet sein.

Nun kann in einem weiteren Schritt, genannt Schritt f), zumindest ein weiteres Sollbild S3 empfangen werden. Es kann in der Praxis vorkommen, dass eine Vielzahl an weiteren Sollbildern S3, ... Sn, Sn+1 empfangen wird. Bevorzugt weisen alle Sollbilder S1, S2, S3, Sn, Sn+1 dieselbe Auflösung auf. Insbesondere wenn eine zeitlich veränderbare Lichtverteilungen abgestrahlt, beispielsweise in Form von animierten Symbolen projiziert werden sollen, kann eine Vielzahl an weiteren Sollbildern S3, Sn, Sn+1 empfangen werden. Jedes Sollbild aus der Vielzahl an weiteren Sollbildern S3, Sn, Sn+1 weist wiederum eine Lichtverteilung 60 mit einer Vielzahl an Solllichtsegmenten 60s auf.

Wie dargestellt, werden die Sollbilder S1, S2, S3, Sn, Sn+1 in regelmäßigen Zeitabständen empfangen. Wobei im vorliegenden Beispiel 60 Sollbilder pro Sekunde empfangen werden.

Auch ist es möglich, dass aufgrund von vorgegebenen Schnittstellen die Anzahl der Sollbilder S1, S2, S3, Sn, Sn+1, welche pro Sekunde empfangen werden, begrenzt ist. Beispielsweise können lediglich 30 oder 20 Bilder pro Sekunde empfangen werden. Auch ist es möglich, dass die Anzahl der Sollbilder S1, S2, S3, Sn, Sn+1, welche pro Sekunde empfangen werden, variiert.

Nun wird aufgrund des zumindest einen weiteren empfangenen Sollbildes S3 eine Iteration der Schritte a) bis e) unter der folgenden Vorgabe durchgeführt:
Das weitere empfangene Sollbild S3 wird dergestalt verwertet, dass das aktuelle, gemäß dem vorhergehenden Schritt a), empfangene Nachfolgebild S2 als neues Anfangsbild S2 in einer neuen Iteration der Schritte a) bis e) verwendet (also empfangen) wird, und dass das zeitlich nachfolgende, gemäß Schritt f) empfangene Sollbild S3 in der neuen Iteration der Schritte a) bis e) als neues Nachfolgebild S3 verwendet (also empfangen) wird.

Damit wird eine neue Iteration der Schritte a) bis e) gestartet und gemäß des dargestellten Zeitdiagramms mit einem neuen Anfangsbild S2 und einem neuen Nachfolgebild S3 durchlaufen.

Demnach wird bei einer Vielzahl an weiteren empfangenen Sollbildern S3, ... Sn, Sn+1 eine gleichlautende Anzahl an Iterationen der Schritte a) bis e) unter derselben Vorgabe durchgeführt.

Durch die Anzahl an Iterationen der Schritte a) bis e) resultiert, in Abstimmung mit der zeitweisen Strahlablenkung durch die Ablenkeinheit 4, eine zeitliche Abfolge der Abstrahlung der, in jeder Iteration gemäß Schritt b) und d), gewandelten niedrig aufgelösten Bilder A1, B1, A2, B2, ... An-1, Bn-1, An, Bn.

Die Abfolge der Schritte muss nicht in der angegebenen Reihenfolge geschehen. Sofern anwendbar, können verschiedene Schritte gleichzeitig eingeleitet werden. Mit entsprechender Hardware und Auslegung des Systems kann beispielsweise Schritt f) bereits vor Abschließen von Schritt e) eingeleitet werden.

In jeder Iteration gemäß Schritt f) kann ein weiterer Schritt a1), zeitlich nach Schritt a), vorgesehen sein, in welchem auf ein Freigabesignal geprüft wird, um sodann, bei Vorliegen eines positiven Freigabesignals, in der Iteration mit den Schritten b) bis e) fortzusetzen und bei Vorliegen eines negativen Freigabesignals in der Iteration der Schritte b) bis e) den Schritt c) zu überspringen und in Schritt d) das Zwischensollbild i1, i2, in-1, in durch das, in dieser Iteration gemäß Schritt a) empfangene, Nachfolgebild S2, S3, Sn, Sn+1 zu ersetzen.

Das Freigabesignal kann beispielsweise von der übergeordneten Steuereinheit 10 oder von der Modulsteuereinheit 2 bereitgestellt werden. Ein positives Freigabesignal liegt vor, wenn sich das Nachfolgebild S2 vom Anfangsbild S1 unterscheidet, und ein negatives Freigabesignal liegt vor, wenn sich das Nachfolgebild S2 vom Anfangsbild S1 nicht unterscheidet. Entsprechend kann die übergeordnete Steuereinheit 10 oder die Modulsteuereinheit 2 dazu eingerichtet sein, das Nachfolgebild S2 und das Anfangsbild S1 vor Schritt a1) zu vergleichen, um ein darauf basierendes Freigabesignal bereitzustellen.

Bevorzugt ist die Modulsteuereinheit 2 dazu eingerichtet, auf das Vorliegen eines positiven oder negativen Freigabesignals zu prüfen.

Weiters kann vorgesehen sein, dass das zumindest eine, gemäß Schritt f) empfangene, weitere Sollbild S3 prädiktiv aus Bilddaten des aktuellen, gemäß dem vorhergehenden Schritt a) empfangenen, Anfangsbildes S1 und aus Bilddaten des aktuellen, gemäß dem vorhergehenden Schritt a) empfangenen, Nachfolgebildes S2 erzeugt wird.

Besonders bevorzugt wird bei einer Vielzahl an weiteren Sollbildern S3, Sn, Sn+1, welche zu einer gleichlautenden Anzahl an Iterationen der Schritte a) bis e) führen, jedes m-te Sollbild S3, Sn, Sn+1 prädiktiv aus den Bilddaten des, in der jeweiligen Iteration gemäß Schritt a) empfangenen, Anfangsbildes S1, S2, S3, Sn, Sn+1 und Nachfolgebildes S2, S3, Sn, Sn+1 erzeugt. m ist dabei eine Natürliche Zahl größer 1, besonders bevorzugt ist m dabei eine natürliche Zahl zwischen 2 und 10.

Die Bilddaten können dabei die Lichtintensitätswerte zumindest einer Anzahl der jeweiligen Solllichtsegmente 60s im Anfangsbild S1 und im Nachfolgebild S2 umfassen. Insbesondere wenn durch das Kraftfahrzeugleuchtmodul 1 Verkehrsteilnehmer ausgeblendet oder gezielt beleuchtet werden, werden zumindest Teile der Lichtverteilung 60 eines Solllichtbildes S1, S2, S3, Sn, Sn+1 durch Objektdaten gerendert, welche einen Bezug zu den jeweiligen Verkehrsteilnehmern aufweisen. Die Bilddaten können damit auch derartige Objektdaten umfassen.

Die übergeordnete Steuereinheit 10 kann dazu eingerichtet sein, das zumindest eine, gemäß Schritt f) empfangene, weitere Sollbild S3, Sn, Sn+1 prädiktiv zu erzeugen.

Die Modulsteuereinheit 2 kann zur Ausführung der Schritte a) bis f) eingerichtet sein. Zu diesem Zweck kann die Modulsteuereinheit 2 dazu eingerichtet sein, das Bildsignal Bs zu empfangen, zu verarbeiten und auf Grundlage dessen das entsprechende Lichtsteuersignal 31 an die Lichtquelle 3 und das entsprechende Ablenksteuersignal 41 an die Ablenkeinheit 4 abzugeben.

Die Modulsteuereinheit 2 kann zu diesem Zweck eine entsprechende Hardware aufweisen. Beispielsweise weist die Modulsteuereinheit 2 zu diesem Zweck einen Microcontroller und/oder FPGA auf.

In Fig. 3b sind beispielhaft mehrere Sollbilder S1, S2, ein Zwischenbild i1 und niedrig aufgelöste Bilder A1, B1, A2 gezeigt. Wie durch die Pfeile angedeutet, wird gemäß Schritt b) das Sollbild S1 in ein niedrig aufgelöstes Bild A1 gewandelt, wird gemäß Schritt c) aus der Zusammenschau zweier Sollbilder S1 und S2 ein Zwischenbild i1 gebildet, wird gemäß Schritt d) aus diesem Zwischenbild i1 ein weiteres niedrig aufgelöstes Bild B1 gewandelt, und bei einer darauffolgenden Iteration der Schritte, gemäß Schritt f), aus dem Sollbild S2 ein niedrig aufgelöstes Bild A2 gewandelt.

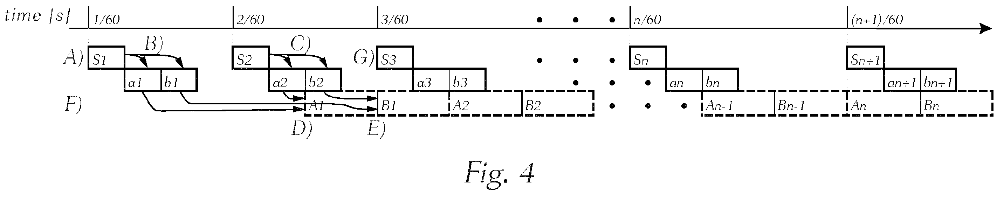

Fig. 4 zeigt ein Zeitdiagramm zum alternativen Verfahren mit einer Abfolge an Schritten, welche entsprechend der Erfindung umgesetzt werden. Es werden zum besseren Verständnis dieselben Bezugszeichen wie in den vorangegangenen Figuren verwendet, sofern diese grundlegend gleiche Bestandteile bezeichnen sollen. Es ist aber klar, dass sich geringfügige Unterschiede aufgrund der alternativen Umsetzung ergeben können. Alle Details, die aus dem ersten Verfahren bekannt geworden sind können, sofern anwendbar, auch in diesem alternativen Verfahren verwirklicht sein. Beispielsweise können die beschriebenen Umwandlungsvorschriften bei diesem Verfahren ebenso angewendet werden.

Das alternative Verfahren basiert auf der selben Idee wie das ersten Verfahren, mit dem Unterschied, dass aus den gemäß Schritt A) empfangenen Sollbildern S1, S2 in den darauffolgenden Schritten B) und C) jeweils niedrig aufgelöste Zwischenbilder a1, a2 anhand einer ersten Umwandlungsvorschrift und jeweils weitere niedrig aufgelöste Zwischenbilder b1, b2 anhand einer zweiten Umwandlungsvorschrift gewandelt werden. Daraus werden dann gemäß den Schritten D) und E) durch Zusammenschau von jeweils einem niedrig aufgelösten Zwischenbild a1, b1 und einem weiteren niedrig aufgelösten Zwischenbild a2, b2 ein niedrig aufgelöstes Bild A1 und ein weiteres niedrig aufgelöstes Bild B2 gebildet. Abschließend wird analog zum ersten Verfahren das Kraftfahrzeugleuchtmodul 1 gemäß Schritt F) derart angesteuert, dass in Abstimmung mit der zeitweisen Strahlablenkung durch die Ablenkeinheit 4 das niedrig aufgelöste Bild A1 zeitlich abwechselnd mit dem weiteren niedrig aufgelösten Bild B1 abgestrahlt wird.

Analog dazu sind dieselben weiterführenden Merkmale der Ausführungsformen, welche in der Figurenbeschreibung zum ersten Verfahren beschrieben werden, auch in diesem alternativen Verfahren anwendbar. Im Detail wird daher nicht noch einmal darauf eingegangen. An dieser Stelle ist anzumerken, dass die Erfindung nicht auf die gezeigten Ausführungsformen beschränkt ist, sondern durch den gesamten Schutzumfang der Ansprüche definiert ist. Etwaige Bezugszeichen in den Ansprüchen sind beispielhaft und dienen nur der einfacheren Lesbarkeit der Ansprüche, ohne diese einzuschränken.

## Patentansprüche

1. Verfahren zur darstellungsoptimierenden Ansteuerung eines Kraftfahrzeugleuchtmoduls (1), wobei das Kraftfahrzeugleuchtmodul (1) zur Abstrahlung einer segmentierten Lichtverteilung mit einzeln ansteuerbaren Lichtsegmenten (51, 53) eingerichtet ist, wobei das Kraftfahrzeugleuchtmodul (1) eine Ablenkeinheit (4) umfasst, mit der eine native Auflösung des Kraftfahrzeugleuchtmoduls (1) durch zumindest zeitweise Strahlablenkung mittels der Ablenkeinheit (4) visuell erhöht werden kann, wobei das Kraftfahrzeugleuchtmodul (1) dazu eingerichtet ist, Sollbilder (S1, S2, S3, Sn, Sn+1) von einer übergeordneten Steuereinheit (10) zu empfangen, welche Sollbilder (S1, S2, S3, Sn, Sn+1) jeweils einer Lichtverteilung entsprechen und eine Auflösung aufweisen, welche die native Auflösung des Kraftfahrzeugleuchtmoduls (1) überschreitet, wobei das Verfahren die folgenden Schritte umfasst:
a) Empfangen eines Sollbildes (S1, S2, S3, Sn, Sn+1), auch Anfangsbild genannt, und eines zeitlich darauf folgenden Sollbildes (S2, S3, Sn, Sn+1), auch Nachfolgebild genannt;
b) Umwandeln des gemäß Schritt a) empfangenen Anfangsbildes (S1, S2, S3, Sn, Sn+1) in ein niedrig aufgelöstes Bild (A1, A2, An-1, An) anhand einer ersten Umwandlungsvorschrift, wobei dieses niedrig aufgelöste Bild (A1, A2, An-1, An) dergestalt gewählt ist, dass dieses die native Auflösung des Kraftfahrzeugleuchtmoduls (1) aufweist;
c) Bilden eines Zwischensollbildes (i1, i2, in-1, in) aus der Zusammenschau des gemäß Schritt a) empfangenen Anfangsbildes (S1, S2, S3, Sn, Sn+1) und des gemäß Schritt a) empfangenen Nachfolgebildes (S2, S3, Sn, Sn+1);
d) Umwandeln des gemäß Schritt c) gebildeten Zwischensollbildes (i1, i2, in-1, in) in ein weiteres niedrig aufgelöstes Bild (B1, B2, Bn-1, Bn) anhand einer zweiten Umwandlungsvorschrift, wobei dieses weitere niedrig aufgelöste Bild (B1, B2, Bn-1, Bn) dergestalt gewählt ist, dass es die native Auflösung des Kraftfahrzeugleuchtmoduls (1) aufweist;
e) Ansteuern des Kraftfahrzeugleuchtmoduls (1), wobei die Ansteuerung dergestalt erfolgt, dass in Abstimmung mit der zeitweisen Strahlablenkung durch die Ablenkeinheit (4) eine zeitliche Abfolge der gemäß Schritt b) und d) gewandelten niedrig aufgelösten Bilder (A1, B1, A2, B2, An-1, Bn-1, An, Bn) durch das Kraftfahrzeugleuchtmodul (1) abgestrahlt wird, wobei die zeitliche Abfolge der Abstrahlung der gemäß Schritt b) und d) gewandelten niedrig aufgelösten Bilder (A1, B1, A2, B2, An-1, Bn-1, An, Bn) derart gewählt ist, dass zeitlich abwechselnd das niedrig aufgelöstes Bild (A1, A2, An-1, An) gewandelt nach Schritt b) und das weitere niedrig aufgelöstes Bild (B1, B2, Bn-1, Bn) gewandelt nach Schritt d) abgestrahlt wird.

2. Verfahren nach Anspruch 1, wobei das Verfahren einen weiteren Schritt f) umfasst, in welchem zumindest ein weiteres Sollbild (S3, Sn, Sn+1) empfangen wird und sodann entsprechend der Anzahl der weiteren Sollbilder eine gleichlautende Anzahl an Iterationen der Schritte a) bis e) unter der folgenden Vorgabe durchgeführt wird: Jedes empfangene Sollbild (S3, Sn, Sn+1) entsprechend der zeitlichen Abfolge wird dergestalt verwertet, dass das aktuelle, gemäß dem vorhergehenden Schritt a), empfangene Nachfolgebild als neues Anfangsbild in einer neuen Iteration der Schritte a) bis e) verwendet wird, und dass das zeitlich nachfolgende, gemäß Schritt f) empfangene Sollbild in der neuen Iteration der Schritte a) bis e) als neues Nachfolgebild verwendet wird.

3. Verfahren nach Anspruch 2, wobei das Verfahren in jeder der Iterationen gemäß Schritt f), zeitlich nach Schritt a), einen weiteren Schritt a1) umfasst, in welchem auf ein Freigabesignal geprüft wird, um sodann, bei Vorliegen eines positiven Freigabesignals, in der Iteration mit den Schritten b) bis e) fortzusetzen und bei Vorliegen eines negativen Freigabesignals in der Iteration der Schritte b) bis e) den Schritt c) zu überspringen und in Schritt d) das Zwischensollbild (i1, i2, in-1, in) durch das, in dieser Iteration gemäß Schritt a) empfangene, Nachfolgebild (S2, S3, Sn, Sn+1) zu ersetzen, wobei ein positives Freigabesignal vorliegt, wenn sich das Nachfolgebild vom Anfangsbild unterscheidet und ein negatives Freigabesignal vorliegt, wenn sich das Nachfolgebild vom Anfangsbild nicht unterscheidet.

4. Verfahren nach Anspruch 2, wobei das zumindest eine, gemäß Schritt f) empfangene, weitere Sollbild (S3) prädiktiv aus Bilddaten des aktuellen, gemäß dem vorhergehenden Schritt a) empfangenen, Anfangsbildes (S1) und des aktuellen, gemäß dem vorhergehenden Schritt a) empfangenen, Nachfolgebildes (S2) erzeugt wird.

5. Verfahren nach einem der vorangegangenen Ansprüche, wobei Schritt c) und Schritt d) gleichzeitig ausgeführt werden.

6. Verfahren nach einem der vorangegangenen Ansprüche, wobei in Schritt c) die Zusammenschau durch eine zumindest teilweise Interpolation der Sollbildinhalte vom Anfangsbild und dem Nachfolgebild erfolgt.

7. Verfahren zur darstellungsoptimierenden Ansteuerung eines Kraftfahrzeugleuchtmoduls (1), wobei das Kraftfahrzeugleuchtmodul (1) zur Abstrahlung einer segmentierten Lichtverteilung mit einzeln ansteuerbaren Lichtsegmenten (51, 53) eingerichtet ist, wobei das Kraftfahrzeugleuchtmodul (1) eine Ablenkeinheit (4) umfasst, mit der eine native Auflösung des Kraftfahrzeugleuchtmoduls (1) durch zumindest zeitweise Strahlablenkung mittels der Ablenkeinheit (4) visuell erhöht werden kann, wobei das Kraftfahrzeugleuchtmodul (1) dazu eingerichtet ist, Sollbilder von einer übergeordneten Steuereinheit (10) zu empfangen, welche Sollbilder (S1, S2, S3, Sn, Sn+1) jeweils einer Lichtverteilung entsprechen und eine Auflösung aufweisen, welche die native Auflösung des Kraftfahrzeugleuchtmoduls (1) überschreitet, wobei das Verfahren die folgenden Schritte umfasst:
A) Empfangen eines Sollbildes (S1, S2, S3, Sn, Sn+1), auch Anfangsbild genannt, und eines zeitlich darauf folgenden Sollbildes (S2, S3, Sn, Sn+1), auch Nachfolgebild genannt;
B) Umwandeln des gemäß Schritt A) empfangenen Anfangsbildes (S1, S2, S3, Sn, Sn+1) in ein niedrig aufgelöstes Zwischenbild (a1, a2, a3, an, an+1) anhand einer ersten Umwandlungsvorschrift und in ein niedrig aufgelöstes Zwischenbild (b1, b2, b3, bn, bn+1) anhand einer zweiten Umwandlungsvorschrift, wobei diese niedrig aufgelösten Zwischenbilder (a1, b1, a2, b2, a3, b3, an, bn, an+1, bn+1) dergestalt gewählt sind, dass diese die native Auflösung des Kraftfahrzeugleuchtmoduls (1) aufweisen;
C) Umwandeln des gemäß Schritt A) empfangenen Nachfolgebildes (S2, S3, Sn, Sn+1) in ein weiteres niedrig aufgelöstes Zwischenbild (a2, a3, an, an+1) anhand der ersten Umwandlungsvorschrift und in ein weiteres niedrig aufgelöstes Zwischenbild (b2, b3, bn, bn+1) anhand der zweiten Umwandlungsvorschrift, wobei die weiteren niedrig aufgelösten Zwischenbilder (a2, b2, a3, b3, an, bn, an+1, bn+1) dergestalt gewählt sind, dass diese die native Auflösung des Kraftfahrzeugleuchtmoduls (1) aufweisen;
D) Bilden eines niedrig aufgelösten Bildes (A1, A2, An-1, An) aus der Zusammenschau eines niedrig aufgelösten Zwischenbildes (a1, a2, a3, an, an+1), gewandelt anhand der ersten Umwandlungsvorschrift gemäß Schritt B), und eines weiteren niedrig aufgelösten Zwischenbildes (a2, a3, an, an+1), gewandelt anhand der ersten Umwandlungsvorschrift gemäß Schritt C), wobei das niedrig aufgelöste Bild (A1, A2, An-1, An) dergestalt gewählt ist, dass dieses die native Auflösung des Kraftfahrzeugleuchtmoduls (1) aufweist;
E) Bilden eines weiteren niedrig aufgelösten Bildes (B1, B2, Bn-1, Bn) aus der Zusammenschau eines niedrig aufgelösten Zwischenbildes (b1, b2, b3, bn, bn+1), gewandelt anhand der zweiten Umwandlungsvorschrift gemäß Schritt B), und eines weiteren niedrig aufgelösten Zwischenbildes (b1, b2, b3, bn, bn+1), gewandelt anhand der zweiten Umwandlungsvorschrift gemäß Schritt C), wobei das weitere niedrig aufgelöste Bild (B1, B2, Bn-1, Bn) dergestalt gewählt ist, dass dieses die native Auflösung des Kraftfahrzeugleuchtmoduls (1) aufweist;
F) Ansteuern des Kraftfahrzeugleuchtmoduls (1), wobei die Ansteuerung dergestalt erfolgt, dass in Abstimmung mit der zeitweisen Strahlablenkung durch die Ablenkeinheit (4) eine zeitliche Abfolge der gemäß Schritt D) und E) gebildeten niedrig aufgelösten Bilder (A1, B1, A2, B2, An-1, Bn-1, An, Bn) durch das Kraftfahrzeugleuchtmodul (1) abgestrahlt wird, wobei die zeitliche Abfolge der Abstrahlung der gemäß Schritt D) und E) gebildeten niedrig aufgelösten Bilder (A1, B1, A2, B2, An-1, Bn-1, An, Bn) derart gewählt ist, dass zeitlich abwechselnd das niedrig aufgelöste Bild (A1, A2, An-1, An), gebildet nach Schritt D), und das weitere niedrig aufgelöste Bild (B1, B2, Bn-1, Bn), gebildet nach Schritt E), abgestrahlt wird.

8. Verfahren nach Anspruch 7, wobei das Verfahren einen weiteren Schritt G) umfasst, in welchem zumindest ein weiteres Sollbild (S3, Sn, Sn+1) empfangen wird und sodann entsprechend der Anzahl der weiteren Sollbilder (S3, Sn, Sn+1) eine gleichlautende Anzahl an Iterationen der Schritte A) bis F) unter der folgenden Vorgabe durchgeführt wird: Jedes empfangene Sollbild (S3, Sn, Sn+1) entsprechend der zeitlichen Abfolge wird dergestalt verwertet, dass das aktuelle, gemäß dem vorhergehenden Schritt A), empfangene Nachfolgebild als neues Anfangsbild in einer neuen Iteration der Schritte A) bis F) verwendet wird, und dass das zeitlich nachfolgende, gemäß Schritt G) empfangene Sollbild (S3, Sn, Sn+1) in der neuen Iteration der Schritte A) bis F) als neues Nachfolgebild verwendet wird.

9. Verfahren nach Anspruch 8, wobei das Verfahren in jeder der Iterationen gemäß Schritt G), zeitlich nach Schritt A), einen weiteren Schritt A1) umfasst, in welchem auf ein Freigabesignal geprüft wird, um sodann bei Vorliegen eines positiven Freigabesignals in der Iteration mit den Schritten B) bis F) fortzusetzen, und bei Vorliegen eines negativen Freigabesignals in der Iteration der Schritte B) bis F) die Schritte C) und E) zu überspringen und in Schritt F) anstatt der zeitlichen Abfolge der niedrig aufgelösten Bilder (A1, B1, A2, B2, An-1, Bn-1, An, Bn) eine zeitliche Abfolge der gemäß Schritt B) gewandelten niedrig aufgelösten Zwischenbilder (a1, b1, a2, b2, a3, b3, an, bn, an+1, bn+1) in Abstimmung mit der zeitweisen Strahlablenkung durch die Ablenkeinheit (4) durch das Kraftfahrzeugleuchtmodul (1) abzustrahlen, wobei ein positives Freigabesignal vorliegt, wenn sich das Nachfolgebild vom Anfangsbild unterscheidet und ein negatives Freigabesignal vorliegt, wenn sich das Nachfolgebild vom Anfangsbild nicht unterscheidet.

10. Verfahren nach Anspruch 8, wobei das zumindest eine, gemäß Schritt G) empfangene weitere Sollbild (S3) prädiktiv aus Bilddaten des aktuellen, gemäß dem vorhergehenden Schritt A) empfangenen, Anfangsbildes (S1) und des aktuellen, gemäß dem vorhergehenden Schritt A) empfangenen, Nachfolgebildes (S2) erzeugt wird.

11. Verfahren nach einem der Ansprüche 7 bis 10, wobei in zumindest einem Schritt der Schritte D) und E) die Zusammenschau durch eine zumindest teilweise Interpolation der Bildinhalte der niedrig aufgelösten Zwischenbilder (a1, b1, a2, b2, a3, b3, an, bn, an+1, bn+1) erfolgt.

12. Kraftfahrzeug mit einem Kraftfahrzeugleuchtmodul (1), wobei das Kraftfahrzeugleuchtmodul (1) zur Abstrahlung einer segmentierten Lichtverteilung eingerichtet ist, wobei das Kraftfahrzeugleuchtmodul (1) eine Ablenkeinheit (4) umfasst, mit der eine native Auflösung des Kraftfahrzeugleuchtmodul (1) durch zumindest zeitweise Strahlablenkung mittels der Ablenkeinheit (4) visuell erhöht werden kann, wobei das Kraftfahrzeug Mittel zur Durchführung zumindest eines der vorangegangenen Verfahren aufweist.

## Claims

1. Method for controlling a motor vehicle lighting module (1) in a manner optimizing the representation, wherein the motor vehicle lighting module (1) is configured to emit a segmented light distribution having individually controllable light segments (51, 53), wherein the motor vehicle lighting module (1) comprises a deflection unit (4) configured to increase a native resolution of the motor vehicle lighting module (1) visually by at least temporary beam deflection using the deflection unit (4), wherein the motor vehicle lighting module (1) is configured to receive target images (S1, S2, S3, Sn, Sn+1) from a higher-level control unit (10), each of said target images (S1, S2, S3, Sn, Sn+1) respectively corresponding to a light distribution and having a resolution that exceeds the native resolution of the motor vehicle lighting module (1), wherein the method comprises the following steps:
a) receiving a target image (S1, S2, S3, Sn, Sn+1), also referred to as initial image, and a target image (S2, S3, Sn, Sn+1) following it in time, also referred to as subsequent image;
b) converting the initial image (S1, S2, S3, Sn, Sn+1) received according to step a) into a low-resolution image (A1, A2, An-1, An) using a first conversion rule, said low-resolution image (A1, A2, An-1, An) being selected such that it has the native resolution of the motor vehicle lighting module (1);
c) forming an intermediate target image (i1, i2, in-1, in) by a combination view of the initial image (S1, S2, S3, Sn, Sn+1) received according to step a) and the subsequent image (S2, S3, Sn, Sn+1) received according to step a);
d) converting the intermediate target image (i1, i2, in-1, in) obtained according to step c) into a further low-resolution image (B1, B2, Bn-1, Bn) using a second conversion rule, said further low-resolution image (B1, B2, Bn-1, Bn) being selected such that it has the native resolution of the motor vehicle lighting module (1);
e) controlling the motor vehicle lighting module (1), wherein said controlling is performed in such a way that the motor vehicle lighting module (1) emits, in coordination with the temporary beam deflection effected by the deflection unit (4), a temporal sequence of the low-resolution images (A1, B1, A2, B2, An-1, Bn-1, An, Bn) converted according to steps b) and d), said temporal sequence of emitting the converted low-resolution images (A1, B1, A2, B2, An-1, Bn-1, An, Bn) being selected such that the low-resolution image (A1, A2, An-1, An) converted according to step b) and the further low-resolution image (B1, B2, Bn-1, Bn) converted according to step d) are emitted alternately over time.

2. Method according to claim 1, wherein the method comprises a further step f) in which at least one further target image (S3, Sn, Sn+1) is received and then, corresponding to the number of further target images, a same number of iterations of steps a) to e) are performed under the following constraint: Each received target image (S3, Sn, Sn+1) is used corresponding to the chronological sequence in such a way that the current subsequent image received according to the preceding step a) is used as the new initial image in a new iteration of steps a) to e), and that the subsequent target image received in accordance with step f) is used as the new subsequent image in the new iteration of steps a) to e).

3. Method according to claim 2, wherein the method comprises, in each of the iterations according to step f), temporally after step a), a further step a1) in which a release signal is checked, in order to proceed, if a positive release signal is present, by continuing the iteration with steps b) to e) in the iteration, and if a negative release signal is present, by skipping step c) in the iteration of steps b) to e) and replacing the intermediate target image (i1, i2, in-1, in) in step d) with the subsequent image (S2, S3, Sn, Sn+1) received in this iteration according to step a), wherein a positive release signal is present if the subsequent image differs from the initial image and a negative release signal is present if the subsequent image does not differ from the initial image.

4. Method according to claim 2, wherein the at least one further target image (S3) received according to step f) is generated predictively from image data of the current initial image (S1) received according to the preceding step a) and the current subsequent image (S2) received according to the preceding step a).

5. Method according to any one of the preceding claims, wherein step c) and step d) are performed simultaneously.

6. Method according to any one of the preceding claims, wherein in step c) the combination view is produced by at least partially interpolating the target image contents of the initial image and the subsequent image.

7. Method for controlling a motor vehicle lighting module (1) in a manner optimizing the representation, wherein the motor vehicle lighting module (1) is configured to emit a segmented light distribution having individually controllable light segments (51, 53), wherein the motor vehicle lighting module (1) comprises a deflection unit (4) configured to increase a native resolution of the motor vehicle lighting module (1) visually by at least temporary beam deflection using the deflection unit (4), wherein the motor vehicle lighting module (1) is configured to receive target images from a higher-level control unit (10), each of said target images (S1, S2, S3, Sn, Sn+1) respectively corresponding to a light distribution and having a resolution that exceeds the native resolution of the automotive lighting module (1), wherein the method comprises the following steps:
A) receiving a target image (S1, S2, S3, Sn, Sn+1), also referred to as the initial image, and a target image (S2, S3, Sn, Sn+1) following it in time, also referred to as the subsequent image;
B) converting the initial image (S1, S2, S3, Sn, Sn+1) received according to step A) into a low-resolution intermediate image (a1, a2, a3, an, an+1) using a first conversion rule and into a low-resolution intermediate image (b1, b2, b3, bn, bn+1) using a second conversion rule, said low-resolution intermediate images (a1, b1, a2, b2, a3, b3, an, bn, an+1, bn+1) being selected such that they have the native resolution of the motor vehicle lighting module (1);
C) converting the subsequent image (S2, S3, Sn, Sn+1) received according to step A) into a further low-resolution intermediate image (a2, a3, an, an+1) using the first conversion rule and into a further low-resolution intermediate image (b2, b3, bn, bn+1) using the second conversion rule, said further low-resolution intermediate images (a2, b2, a3, b3, an, bn, an+1, bn+1) being selected such that they have the native resolution of the motor vehicle lighting module (1);
D) forming a low-resolution image (A1, A2, An-1, An) by a combination view of a low-resolution intermediate image (a1, a2, a3, an, an+1) converted using the first conversion rule according to step B) and a further low-resolution intermediate image (a2, a3, an, an+1) converted using the first conversion rule according to step C), said low-resolution image (A1, A2, An-1, An) being selected such that it has the native resolution of the motor vehicle lighting module (1);
E) forming a further low-resolution image (B1, B2, Bn-1, Bn) by a combination view of a low-resolution intermediate image (b1, b2, b3, bn, bn+1) converted using the second conversion rule according to step B) and a further low-resolution intermediate image (b1, b2, b3, bn, bn+1) converted using the second conversion rule according to step C), said further low-resolution image (B1, B2, Bn-1, Bn) being selected such that it has the native resolution of the motor vehicle lighting module (1);
F) controlling the motor vehicle lighting module (1), wherein said controlling is performed in such a way that the motor vehicle lighting module (1) emits, in coordination with the temporary beam deflection effected by the deflection unit (4), a temporal sequence of the low-resolution images (A1, B1, A2, B2, An-1, Bn-1, An, Bn) formed according to steps D) and E), said temporal sequence of emitting the low-resolution images (A1, B1, A2, B2, An-1, Bn-1, An, Bn) formed according to steps D) and E) being selected such that the low-resolution image (A1, A2, An-1, An) formed according to step D) and the further low-resolution image (B1, B2, Bn-1, Bn) formed according to step E) are emitted alternately over time.

8. Method according to claim 7, wherein the method comprises a further step G) in which at least one further target image (S3, Sn, Sn+1) is received and then, corresponding to the number of further target images (S3, Sn, Sn+1), a same number of iterations of steps A) to F) are performed under the following constraint: Each received target image (S3, Sn, Sn+1) is used corresponding to the chronological sequence in such a way that the current subsequent image received according to the preceding step A) is used as the new initial image in a new iteration of steps A) to F), and that the chronologically subsequent target image (S3, Sn, Sn+1) received according to step G) is used as the new subsequent image in the new iteration of steps A) to F).

9. Method according to claim 8, wherein the method comprises, in each of the iterations according to step G), temporally after step A), a further step A1) in which a release signal is checked, in order to proceed, if a positive release signal is present, by continuing with steps B) to F) in the iteration and, if a negative enable signal is present, by skipping, in the iteration of steps B) to F), the steps C) and E) and, in step F) emitting, instead of the temporal sequence of the low-resolution images (A1, B1, A2, B2, An-1, Bn-1, An, Bn), a temporal sequence of the low-resolution intermediate images (a1, b1, a2, b2, a3, b3, an, bn, an+1, bn+1) converted according to step B) in coordination with the temporary beam deflection using the deflection unit (4) through the motor vehicle lighting module (1), wherein a positive enable signal is present if the subsequent image differs from the initial image and a negative enable signal is present if the subsequent image does not differ from the initial image.

10. Method according to claim 8, wherein the at least one further target image (S3) received according to step G) is generated predictively from image data of the current initial image (S1) received according to the preceding step A) and the current subsequent image (S2) received according to the preceding step A).

11. Method according to any one of claims 7 to 10, wherein in at least one of steps D) and E), the combination view is produced by at least partially interpolating the image contents of the low-resolution intermediate images (a1, b1, a2, b2, a3, b3, an, bn, an+1, bn+1).

12. Motor vehicle with a motor vehicle lighting module (1), wherein the motor vehicle lighting module (1) is configured to emit a segmented light distribution, wherein the motor vehicle lighting module (1) comprises a deflection unit (4) configured to increase a native resolution of the motor vehicle lighting module (1) visually by at least temporary beam deflection using the deflection unit (4), wherein the motor vehicle comprises means for carrying out at least one of the preceding methods.

## Revendications

1. Procédé pour commander un module d'éclairage (1) pour véhicule automobile de manière optimisant la représentation, le module d'éclairage (1) pour véhicule automobile étant configuré pour émettre une répartition lumineuse segmentée avec des segments lumineux (51, 53) pouvant être commandés individuellement, le module d'éclairage (1) pour véhicule automobile comportant une unité de déviation (4) avec laquelle une résolution native du module d'éclairage (1) pour véhicule automobile peut être augmentée visuellement par une déviation au moins temporaire du faisceau au moyen de l'unité de déviation (4), le module d'éclairage (1) pour véhicule automobile étant conçu pour recevoir des images de consigne (S1, S2, S3, Sn, Sn+1) provenant d'une unité de commande supérieure (10), lesquelles images de consigne (S1, S2, S3, Sn, Sn+1) correspondent chacune à une répartition lumineuse et présentent une résolution qui dépasse la résolution native du module d'éclairage pour véhicule automobile (1), le procédé comprenant les étapes suivantes :
a) réception d'une image de consigne (S1, S2, S3, Sn, Sn+1), également dite image initiale, et d'une image de consigne (S2, S3, Sn, Sn+1) qui la suit dans le temps, également dita image suivante ;
b) conversion de l'image initiale (S1, S2, S3, Sn, Sn+1) reçue conformément à l'étape a) en une image à faible résolution (A1, A2, An-1, An) à l'aide d'une première règle de conversion, ladite image à faible résolution (A1, A2, An-1, An) étant choisie de telle sorte qu'elle présente la résolution native du module d'éclairage automobile (1) ;
c) formation d'une image intermédiaire (i1, i2, in-1, in) en mélangeant l'image initiale (S1, S2, S3, Sn, Sn+1) reçue conformément à l'étape a) et l'image suivante (S2, S3, Sn, Sn+1) reçue conformément à l'étape a) ;
d) conversion de l'image cible intermédiaire (i1, i2, in-1, in) formée conformément à l'étape c) en une autre image à faible résolution (B1, B2, Bn-1, Bn) à l'aide d'une deuxième règle de conversion, ladite autre image à faible résolution (B1, B2, Bn-1, Bn) étant choisie de telle sorte qu'elle présente la résolution native du module d'éclairage automobile (1) ;
e) commande du module d'éclairage automobile (1), la commande s'effectuant de telle sorte qu'une séquence temporelle des images à faible résolution (A1, B1, A2, B2, An-1, Bn-1, An, Bn) converties conformément aux étapes b) et d) est émise par le module d'éclairage automobile (1), la séquence temporelle d'émission des images à faible résolution (A1, B1, A2, B2, An-1, Bn-1, An, Bn) étant choisie de telle sorte que l'image à faible résolution (A1, A2, An-1, An) convertie selon l'étape b) et l'autre image à faible résolution (B1, B2, Bn-1, Bn) convertie selon l'étape d) soient émises en alternance dans le temps.

2. Procédé selon la revendication 1, dans lequel le procédé comprend une étape f) de plus, dans laquelle au moins une autre image cible (S3, Sn, Sn+1) est reçue, puis, en fonction du nombre d'autres images cibles, un nombre égal d'itérations des étapes a) à e) est effectué selon la spécification suivante : chaque image cible reçue (S3, Sn, Sn+1) reçue est exploitée selon la séquence temporelle de telle sorte que l'image suivante actuelle reçue conformément à l'étape a) précédente soit utilisée comme nouvelle image initiale dans une nouvelle itération des étapes a) à e), et que l'image cible suivante dans le temps reçue conformément à l'étape f) soit utilisée comme nouvelle image suivante dans la nouvelle itération des étapes a) à e).

3. Procédé selon la revendication 2, dans lequel le procédé comprend, dans chacune des itérations selon l'étape f), après l'étape a) une autre étape a1) dans laquelle un signal de validation est vérifié, afin de poursuivre ensuite, en présence d'un signal de validation positif, l'itération avec les étapes b) à e) et, en présence d'un signal de validation négatif, sauter l'étape c) dans l'itération des étapes b) à e) et remplacer dans l'étape d) l'image de consigne intermédiaire (i1, i2, in-1, in) par l'image suivante (S2, S3, Sn, Sn+1) reçue dans cette itération conformément à l'étape a), à condition qu'un signal de validation positif est présent lorsque l'image suivante diffère de l'image initiale et qu'un signal de validation négatif est présent lorsque l'image suivante ne diffère pas de l'image initiale.

4. Procédé selon la revendication 2, dans lequel la au moins une autre image cible (S3) reçue conformément à l'étape f) est générée de manière prédictive à partir des données d'image de l'image initiale actuelle (S1) reçue conformément à l'étape a) précédente et de l'image suivante actuelle (S2) reçue conformément à l'étape a) précédente.

5. Procédé selon l'une quelconque des revendications précédentes, dans lequel les étapes c) et d) sont exécutées simultanément.

6. Procédé selon l'une quelconque des revendications précédentes, dans lequel, à l'étape c), la mélange s'effectue par une interpolation au moins partielle des contenus d'image de consigne de l'image initiale et de l'image suivante.

7. Procédé pour commander un module d'éclairage (1) pour véhicule automobile de manière optimisant la représentation, le module d'éclairage (1) pour véhicule automobile étant configuré pour émettre une répartition lumineuse segmentée avec des segments lumineux (51, 53) pouvant être commandés individuellement, le module d'éclairage (1) pour véhicule automobile comportant une unité de déviation (4) avec laquelle une résolution native du module d'éclairage (1) pour véhicule automobile peut être augmentée visuellement par une déviation au moins temporaire du faisceau au moyen de l'unité de déviation (4), le module d'éclairage (1) de véhicule automobile étant conçu pour recevoir des images de consigne provenant d'une unité de commande supérieure (10), lesquelles images de consigne (S1, S2, S3, Sn, Sn+1) correspondent chacune à une répartition lumineuse et présentent une résolution qui dépasse la résolution native du module d'éclairage pour véhicule automobile (1), le procédé comprenant les étapes suivantes :
A) réception d'une image de consigne (S1, S2, S3, Sn, Sn+1), également dite image initiale, et d'une image de consigne (S2, S3, Sn, Sn+1) qui la suit dans le temps, également dite image suivante ;
B) conversion de l'image initiale (S1, S2, S3, Sn, Sn+1) reçue conformément à l'étape A) en une image intermédiaire à faible résolution (a1, a2, a3, an, an+1) à l'aide d'une première règle de conversion et en une image intermédiaire à faible résolution (b1, b2, b3, bn, bn+1) à l'aide d'une deuxième règle de conversion, lesdites images intermédiaires à faible résolution (a1, b1, a2, b2, a3, b3, an, bn, an+1, bn+1) étant choisies de telle sorte qu'elles présentent la résolution native du module d'éclairage automobile (1) ;
C) conversion de l'image suivante (S2, S3, Sn, Sn+1) reçue conformément à l'étape A) en une autre image intermédiaire à faible résolution (a2, a3, an, an+1) à l'aide de la première règle de conversion et en une autre image intermédiaire à faible résolution (b2, b3, bn, bn+1) à l'aide de la deuxième règle de conversion, lesdites autres images intermédiaires à faible résolution (a2, b2, a3, b3, an, bn, an+1, bn+1) étant choisies de telle sorte qu'elles présentent la résolution native du module d'éclairage automobile (1) ;
D) formation d'une image à faible résolution (A1, A2, An-1, An) en mélangeant une image intermédiaire à faible résolution (a1, a2, a3, an, an+1) convertie selon la première règle de conversion conformément à l'étape B) et une autre image intermédiaire à faible résolution (a2, a3, an, an+1) convertie à l'aide de la première règle de conversion selon l'étape C), ladite image à faible résolution (A1, A2, An-1, An) étant choisie de telle sorte qu'elle présente la résolution native du module d'éclairage automobile (1) ;
E) formation d'une autre image à faible résolution (B1, B2, Bn-1, Bn) en mélangeant une image intermédiaire à faible résolution (b1, b2, b3, bn, bn+1) convertie selon la deuxième règle de conversion conformément à l'étape B) et une autre image intermédiaire à faible résolution (b1, b2, b3, bn, bn+1) convertie à l'aide de la deuxième règle de conversion selon l'étape C), ladite autre image à faible résolution (B1, B2, Bn-1, Bn) étant choisie de telle sorte qu'elle présente la résolution native du module d'éclairage pour véhicule automobile (1) ;
F) commande du module d'éclairage automobile (1), la commande s'effectuant de telle sorte qu'en coordination avec la déviation temporaire du faisceau par l'unité de déviation (4), une séquence temporelle des images à faible résolution (A1, B1, A2, B2, An-1, Bn-1, An, Bn) formées conformément aux étapes D) et E) est émise par le module d'éclairage pour véhicule automobile (1), la séquence temporelle d'émission des images à faible résolution (A1, B1, A2, B2, An-1, Bn-1, An, Bn) étant choisie de telle sorte que l'image à faible résolution (A1, A2, An-1, An) formée selon l'étape D) et l'autre image à faible résolution (B1, B2, Bn-1, Bn) formée selon l'étape E) soient émises en alternance dans le temps.

8. Procédé selon la revendication 7, dans lequel le procédé comprend une étape G) de plus, dans laquelle au moins une autre image cible (S3, Sn, Sn+1) est reçue, puis, en fonction du nombre d'autres images cibles (S3, Sn, Sn+1), un nombre égal d'itérations des étapes A) à F) est effectué selon la spécification suivante : chaque image cible reçue (S3, Sn, Sn+1) est exploitée en fonction de la séquence temporelle de telle sorte que l'image suivante actuelle, reçue conformément à l'étape A) précédente, soit utilisée comme nouvelle image initiale dans une nouvelle itération des étapes A) à F), et que l'image cible suivante dans le temps, reçue conformément à l'étape G) (S3, Sn, Sn+1) reçue conformément à l'étape G) est utilisée comme nouvelle image suivante dans la nouvelle itération des étapes A) à F).

9. Procédé selon la revendication 8, dans lequel le procédé comprend, dans chacune des itérations selon l'étape G), après l'étape A), une autre étape A1) dans laquelle un signal de validation est vérifié, afin de poursuivre ensuite, en présence d'un signal de validation positif, l'itération avec les étapes B) à F), et, en présence d'un signal de validation négatif dans l'itération des étapes B) à F), sauter les étapes C) et E) et, à l'étape F), au lieu de la séquence temporelle des images à faible résolution (A1, B1, A2, B2, An-1, Bn-1, An, Bn), émettre une séquence temporelle des images intermédiaires à faible résolution (a1, b1, a2, b2, a3, b3, an, bn, an+1, bn+1) converties conformément à l'étape B), en coordination avec la déviation temporaire du faisceau par l'unité de déviation (4) à travers le module d'éclairage automobile (1), à condition qu'un signal de validation positif est présent lorsque l'image suivante diffère de l'image initiale et qu'un signal de validation négatif est présent lorsque l'image suivante ne diffère pas de l'image initiale.

10. Procédé selon la revendication 8, dans lequel ladite au moins une autre image cible (S3) reçue conformément à l'étape G) est générée de manière prédictive à partir des données d'image de l'image initiale actuelle (S1) reçue conformément à l'étape A) précédente et de l'image suivante actuelle (S2) reçue conformément à l'étape A) précédente.

11. Procédé selon l'une quelconque des revendications 7 à 10, dans lequel, dans au moins une des étapes D) et E), la mélange s'effectue par une interpolation au moins partielle des contenus d'image des images intermédiaires à faible résolution (a1, b1, a2, b2, a3, b3, an, bn, an+1, bn+1).

12. Véhicule automobile équipé d'un module d'éclairage (1), le module d'éclairage (1) étant configuré pour émettre une répartition lumineuse segmentée, le module d'éclairage (1) comportant une unité de déviation (4) permettant d'augmenter visuellement la résolution native du module d'éclairage pour véhicule automobile (1) par une déviation au moins temporaire du faisceau au moyen de l'unité de déviation (4), le véhicule automobile comportant des moyens pour mettre en œuvre au moins l'un des procédés précédents.
